# EUROPEAN PATENT APPLICATION

(11) **EP 2 495 610 A1**
(43) Date of publication of application: **05.09.2012**
(21) Application number: 10826392.2
(22) Date of filing: 28.05.2010
(51) Int. Cl.: G02F 1/1337, G02F 1/1343

(54) **LIQUID CRYSTAL DISPLAY ELEMENT**

(30) Priority: 30.10.2009 JP 2009250395; 15.01.2010 JP 2010006692
(71) Applicant: Sharp Kabushiki Kaisha, Osaka-shi, Osaka 545-8522 (JP)
(72) Inventor: MATSUMOTO, Toshihiro, Osaka-shi, Osaka 545-8522 (JP); MURATA, Mitsuhiro, Osaka-shi, Osaka 545-8522 (JP); KOIDE, Takako, Osaka-shi, Osaka 545-8522 (JP)
(74) Representative: Müller - Hoffmann & Partner
(86) International application number: PCT/JP2010/059128
(87) International publication number: WO 2011/052257

(57) **Abstract**

The present invention provides a liquid crystal display element that sufficiently improves the reliability and the optical characteristics, and can be driven by a low voltage. The liquid crystal display element of the present invention includes a pair of substrates; and a liquid crystal layer sealed between the substrates. The liquid crystal layer includes liquid crystal molecules having positive dielectric constant anisotropy, at least one of the substrates includes a pair of comb-shaped electrodes, at least one of the substrates includes a vertical alignment film in a display region on a face in contact with the liquid crystal layer, and the vertical alignment film is an inorganic alignment film made of an inorganic material.

## Description

### TECHNICAL FIELD

The present invention relates to a liquid crystal display element. More specifically, the present invention relates to a liquid crystal display element suited for display modes in which light passing through a liquid crystal layer is controlled by changing the alignment of liquid crystal molecules in the liquid crystal layer into a horizontal bend alignment by applying a voltage.

### BACKGROUND ART

Liquid crystal display elements (hereafter, abbriviated as LCDs) are thin and light display devices with low electrical power consumption. They are used in various applications such as mobile phones, PDAs, car navigation systems, PC monitors, televisions, and information displays such as guide boards in stations and outdoor notice boards.

In the current LCD display technology, the polarization of light passing through a liquid crystal layer is changed by controlling the alignment of liquid crystal molecules by applying an electric field so that the amount of light passing through a polarizing plate is controlled. The display performance of LCDs depends on the alignment of liquid crystal molecules under application of a voltage and the intensity and direction of an applied electric field. The display mode of LCDs is categorized into various groups based on the alignment of liquid crystal molecules in a voltage free state, and the direction of an applied electric field. For example, TN (Twisted Nematic) mode liquid crystal display elements and OCB (Optically Compensated Bend) mode liquid crystal display elements are known as liquid crystal display elements of vertical electric field modes in which the liquid crystal alignment in the voltage free state is horizontal to substrates. These elements implement high transmittance, high-speed response performance, and the like. MVA (Multi-Domain Vertical Alignment) mode liquid crystal display elements are representatives of liquid crystal display elements of vertical electric field modes in which the liquid crystal alignment is vertical to substrates in the voltage free state, and TBA (Transverse Bend Alignment) mode liquid crystal display elements are representatives of liquid crystal display elements of horizontal electric field modes in which the liquid crystal alignment is vertical to substrates in the voltage free state. These elements exhibit high contrast performance. IPS (In-plane Switching) mode liquid crystal display elements are representatives of liquid crystal display elements of horizontal electric field modes in which the liquid crystal alignment is horizontal to substrates in the voltage free state. These elements are particularly excellent in wide viewing angle performance. Still, no liquid crystal display element is satisfactory in terms of all of the wide viewing angle performance, high contract performance, and high response speed performance, whereby various improvements have been made in order to achieve satisfactory levels of all these performances.

For example, a liquid crystal device that includes liquid crystal having negative dielectric constant anisotropy sandwiched between a pair of substrates is disclosed wherein at least one of the substrates includes pixel electrodes and an inorganic alignment film for controlling the alignment of the liquid crystal on the pixel electrodes, and the inorganic alignment film includes a first oblique vapor deposition film and a second oblique vapor deposition film each of which is formed by performing oblique vapor deposition on the substrate from an opposite deposition (for example, Patent Document 1). Another example is a liquid crystal device including an alignment film of a porous inorganic film on at least one of a pair of substrates wherein the alignment film includes a plurality of convex portions on the surface facing a liquid crystal layer, and the convex portions each have a long axis and a short axis when viewed in a plan view (for example, Patent Document 2). Still another example is an active matrix liquid crystal display device wherein the extrapolation length, which indicates the strength of twisted bonds between liquid crystal molecules at the interface between an alignment film and a liquid crystal layer, and the alignment film surface, is not less than 10% of the gap between a pair of substrates (for example, Patent Document 3). In addition, TBA mode liquid crystal display devices and the like have also been disclosed (for example, Patent Documents 4 to 10).

### PRIOR ART REFERENCES

### [Patent Documents]

Patent Document 1: JP 2008-225032 A
Patent Document 2 JP 2008-191264 A
Patent Document 3: JP 2005-189889 A
Patent Document 4: JP 57-618 A
Patent Document 5: JP 10-186351 A
Patent Document 6: JP 10-333171 A
Patent Document 7: JP 11-24068 A
Patent Document 8: JP 2000-275682 A
Patent Document 9: JP 2002-55357 A
Patent Document 10: JP 2001-159759 A

### SUMMARY OF THE INVENTION

### PROBLEMS TO BE SOLVED BY THE INVENTION

Regarding such liquid crystal devices as described above, limitation of the dielectric constant of the alignment films is not suggested. In addition, voltage reducing effects and high-speed response effects of these liquid crystal devices are not recited.
Regarding the above-described liquid crystal devices including liquid crystal having negative dielectric constant anisotropy and an inorganic alignment film, more sufficient throughput (productivity) and easier control of the tilt direction of liquid crystal molecules have been desired.

The present invention has been made in view of the above problems and an object of the present invention is to provide a liquid crystal display element that has sufficiently improved reliability and optical characteristics and can be driven by a low voltage.

### MEANS FOR SOLVING THE PROBLEMS

The following describes how the present inventors have made the present invention with reference to an example of a TBA mode. However, the present invention is not limited to the TBA mode.
The present inventors have examined various ways to reduce the driving voltage of high-contrast liquid crystal display elements, and focused on the movement of liquid crystal molecules caused by a voltage applied in the TBA display mode in which the liquid crystal molecules are tilted toward the centers of non-electrode portions from their initial vertical alignment when an electric field is applied.

In the case of a TBA mode liquid crystal display element, liquid crystal should be a material having a dielectric constant anisotropy Δε (hereinafter, also simply referred to as Δε) of approximately 20 to be driven (approximately -3 for the MVA mode and approximately 5 for the TN mode) if a voltage to drive the liquid crystal is set to be equivalent to those used in MVA and TN modes. Generally, materials having a larger Δε tend to have lower reliability and lower optical characteristics.

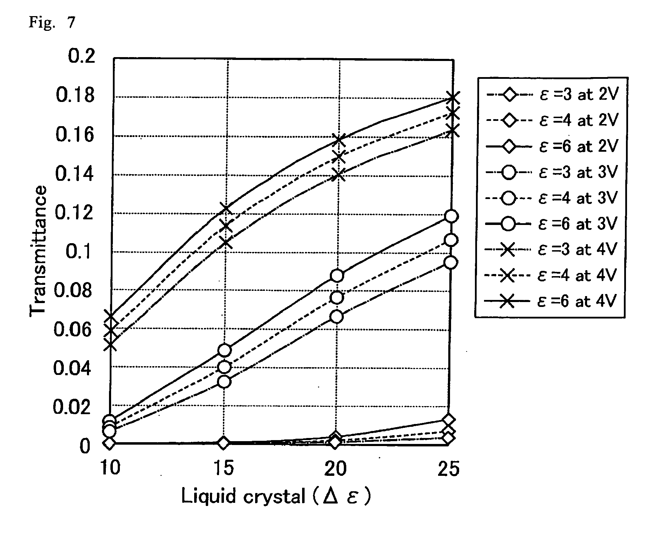

Fig. 7 shows data of the dielectric constant anisotropy Δε versus the transmittance of liquid crystal materials used in a TBA mode including a common organic alignment film (dielectric constant ε: 3, film thickness: 1000 Å), which was obtained by applying 2 V, 3 V, and 4 V.
In order to achieve a desired transmittance using liquid crystal having a Δε as small as possible, a high voltage should be applied. This tendency is more apparent in the range over a certain Δε of liquid crystal (Δε is approximately 10 or larger in the case of 2 V, which is a start-up voltage).

The reason why the driving voltage increases as described above is as follow. In the case of the TBA mode, since the transmittance depends on liquid crystal in non-electrode portions, the non-electrode portions are designed to be as large as possible, which results in a larger distance between electrodes. For example, in the case of the MVA mode or the TN mode, the distance between electrodes (i.e. cell thickness) is typically 3 to 4 µm. On the other hand, in the case of the TBA mode, the distance is approximately 8 µm. Therefore, the threshold voltage should be high. In addition, in the TBA mode, since a pair of comb-shaped electrodes for driving liquid crystal molecules located therebetween is formed on one of a pair of substrates, the electric field becomes weaker as it becomes closer to the substrate opposed to the comb-shaped electrode substrate. The movement of liquid crystal molecules likewise becomes weaker (there exists a dead zone.) In order to avoid this, the threshold voltage should be high.

As a result of intensive studies, the present inventors have found that a sufficient increase of an electric field applied to liquid crystal, which can be achieved by an alignment film having a higher dielectric constant, and a reduction of the anchoring force (anchoring energy) in the polar angle direction at the interface between a substrate and a liquid crystal layer are effective in sufficiently reducing the Δε of the liquid crystal and therefore achieving improved reliability and improved optical characteristics,and also effective in reducing the driving voltage.

Further, the present inventors have examined various practical methods for sufficiently enhancing the reliability and optical characteristics and reducing the driving voltage of liquid crystal display elements of TBA and other modes, and found that the electric field applied to liquid crystal can be sufficiently increased, the Δε of the liquid crystal can be sufficiently reduced, and the anchoring energy in the polar direction at the interface between a substrate and a liquid crystal layer can be effectively reduced by forming an inorganic alignment film made of an inorganic material as a vertical alignment film of the substrate. The present inventors thus found a way to solve the above problem and completed the present invention.

Specifically, the present invention provides a liquid crystal display element including: a pair of substrates; and a liquid crystal layer sealed between the substrates, wherein the liquid crystal layer includes liquid crystal molecules having positive dielectric constant anisotropy, at least one of the substrates includes a pair of comb-shaped electrodes, at least one of the substrates includes a vertical alignment film in a display region on a face in contact with the liquid crystal layer, and the vertical alignment film is an inorganic alignment film made of an inorganic material.
The following discussion gives a detailed description of the liquid crystal display element of the present invention.

The liquid crystal display element of the present invention includes a pair of substrates and a liquid crystal layer sealed between the substrates. The liquid crystal layer is filled with liquid crystal molecules that are aligned by applying a certain voltage. One or both of the substrates include lines, electrodes, semiconductor elements, and other components. Hence, the alignment of the liquid crystal molecules can be controlled by applying a voltage.

In the liquid crystal display element of the present invention, the liquid crystal molecules are liquid crystal molecules having positive dielectric constant anisotropy (nematic liquid crystal molecules). Hence, the liquid crystal molecules are aligned along the direction of an electric field when a voltage is applied to the liquid crystal layer. The liquid crystal molecules are, for example, aligned in arches. As a result, a wide view angle can be achieved owing to self-compensation.
The dielectric constant anisotropy Δε of the liquid crystal molecules is preferably not less than 10. In this case, the effects of the present invention can be more strongly exerted. The Δε is more preferably not less than 15. The upper limit thereof is preferably 25.

In the liquid crystal display element of the present invention, at least one of the substrates includes a pair of comb-shaped electrodes. The entire structure of the comb-shaped electrodes is not particularly limited, provided that they include a comb's backbone and teeth projecting from the backbone when viewed in a plane view. In the case that, for example, one of the comb-shaped electrodes is pixel electrodes provided in respective pixels to receive a signal voltage and the other is a common electrode to receive a constant common voltage, electric fields (for example, horizontal electric fields) can be formed in the respective pixels according to image signals transmitted to the respective pixel electrodes.
Preferably, the electrode distance between the comb-shaped electrodes is, for example, 7 to 9 µm.

At least one of the substrates includes a vertical alignment film on a face in contact with the liquid crystal layer, and the vertical alignment film is an inorganic alignment film made of an inorganic material. The inorganic alignment film is preferably configured to align the liquid crystal molecules substantially vertically to a surface of at least one of the substrates when no voltage is applied. In other words, the inorganic alignment film is preferably an inorganic alignment film that maintains the liquid crystal molecules near the surface at an angle, as determined assuming that the direction parallel to the substrate surface is 0°, of approximately 90° (90° ± 0 to 4°) toward the polar angle direction, when no voltage is applied. The alignment may be attributed to the material of the inorganic alignment film or to the structure of the inorganic alignment film.
The inorganic alignment film is preferably formed to cover the entire display region when viewed along the normal to the substrate surface.

The structure of the liquid crystal display element of the present invention is not particularly limited by other components, provided that it essentially includes the above-mentioned components.
The following gives a detailed explanation of preferred embodiments of the liquid crystal display element of the present invention.

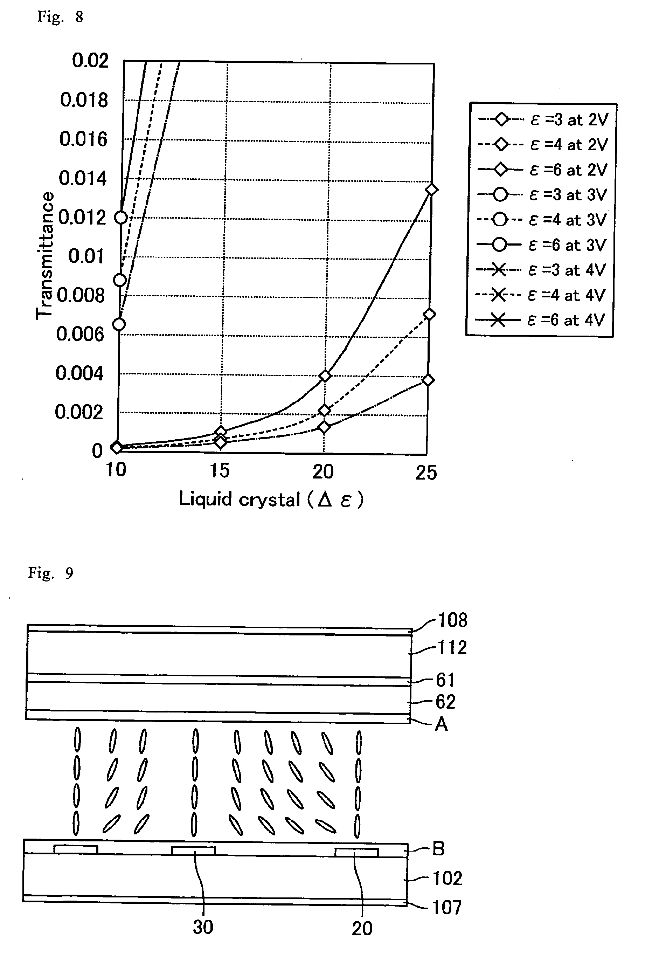

In one preferred embodiment of the liquid crystal display element of the present invention, the inorganic material has a dielectric constant of 4 to 6. In this case, a sufficiently large electric field can be applied to the liquid crystal. Hence, a desired transmittance can be achieved even if liquid crystal having a small dielectric constant anisotropy Δε is used to provide sufficiently improved reliability and optical characteristics of the material and the threshold voltage is low (see Fig. 7 and Fig. 8, which is a partially enlarged graph of Fig. 7). Typically, inorganic silicon materials have a dielectric constant of 6 or less. An embodiment in which the inorganic material contains silicon is also one preferred embodiment of the present invention. It should be noted that the term "transmittance" in Figs. 7 and 8 refers to a transmittance ratio determined by defining the transmittance 100% as 1.

The inorganic alignment film is preferably made of a material having a SiO bond. The use of a material having a SiO bond leads to a reduction of the anchoring energy to the liquid crystal molecules.

In another preferred embodiment of the liquid crystal display element of the present invention, the inorganic alignment film is provided only on the at least one of the substrates which includes the comb-shaped electrodes. In this case, the response performance of the liquid crystal molecules is very good.

In still anotherpreferred embodiment of the liquid crystal display element of the present invention, the inorganic alignment film is formed by printing, spin coating, or ink jetting. Hence, the liquid crystal display element of the present invention can be easily formed, thereby sufficiently improving throughput. The printing, spin coating, or ink jetting can provide an inorganic alignment film that aligns the liquid crystal molecules vertically when no voltage is applied.

Any of the structures of the above embodiments may be combined within the scope of the present invention.

### EFFECTS OF THE INVENTION

The present invention enables an initial vertical alignment liquid crystal display element to achieve improved reliability and improved optical characteristics of liquid crystal by using liquid crystal having a small dielectric constant anisotropy Δε as a material and to be driving by a low voltage.

### BRIEF DESCRIPTION OF THE DRAWINGS

Fig. 1 is a perspective view schematically illustrating a liquid crystal display element of the embodiment 1 of the present invention;
Fig. 2 is a cross-sectional view schematically illustrating the liquid crystal display element of the embodiment 1 of the present invention;
Fig. 3 is a graph of the voltage-transmittance property of TBA mode cells of Examples 1 and 2 and Comparative Example 1 in the case that the dielectric constant anisotropy Δε of liquid crystal is 10;
Fig. 4 is a graph of the voltage-transmittance property of the TBA mode cells of Examples 1 and 2 and Comparative Example 1 in the case that the dielectric constant anisotropy Δε of the liquid crystal is 15;
Fig. 5 is a graph of the voltage-transmittance property of the TBA mode cells of Examples 1 and 2 and Comparative Example 1 in the case that the dielectric constant anisotropy Δε of the liquid crystal is 20;
Fig. 6 is a graph of the voltage-transmittance property of the TBA mode cells of Examples 1 and 2 and Comparative Example 1 in the case that the dielectric constant anisotropy Δε of the liquid crystal is 25;
Fig. 7 is a graph of the dielectric constant anisotropy-transmittance property of liquid crystal in TBA mode cells;
Fig. 8 is a partially enlarged graph of Fig. 7; and
Fig. 9 is a cross-sectional view schematically illustrating the structure of a liquid crystal display element of the embodiment 2.

### MODES FOR CARRYING OUT THE INVENTION

Hereinafter, the present invention is described in more detail by way of embodiments, but these embodiments are not intended to limit the present invention.

### (Embodiment 1)

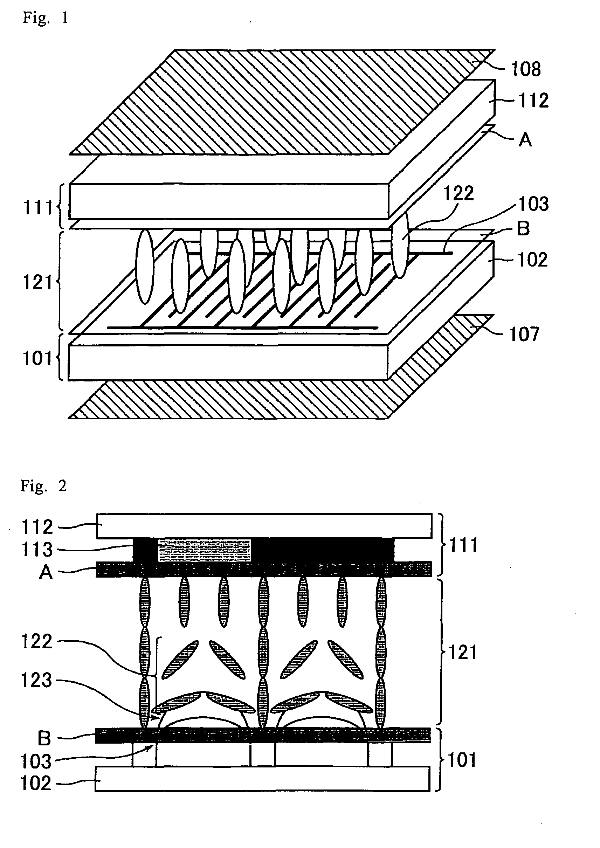

Fig. 1 is a perspective view schematically illustrating a liquid crystal display element of the embodiment 1 of the present invention.
Fig. 2 is a cross-sectional view schematically illustrating the liquid crystal display element of the embodiment 1 of the present invention.
As illustrated in Figs. 1 and 2, the liquid crystal display element of the embodiment 1 of the present invention includes an array substrate 101, an opposed substrate 111 facing a glass substrate 102, and a liquid crystal layer 121 sandwiched between the array substrate 101 and the opposed substrate 111 . The array substrate 101 includes a pair of comb-shaped electrodes 103 for generating a horizontal electric field, and is mainly constituted by the glass substrate 102 on which an alignment film B having a vertical alignment group is disposed. The opposed substrate 111 is mainly constituted by a glass substrate 112 on which a color filter (CF) 113 and an alignment film A having a vertical alignment group are disposed.

One of the comb-shaped electrodes 103 is pixel electrodes and the other is a common electrode. Both of them basically include teeth. The teeth of the pixel electrodes and the teeth of the common electrode are parallel to each other and the teeth of one of the comb-shaped electrodes run into the gaps between the teeth of the other electrode with a certain distance between each pair of adjacent teeth. The pixel electrode refers to electrodes disposed in the respective pixels in the display region and each of them receives an image signal. The common electrode is an electrode that is entirely conductive even on the boundaries of the pixels and receives a common signal.

When a predetermined voltage is applied to the comb-shaped electrodes 103, an arch electric field is formed in the liquid crystal layer. Hence, positive nematic liquid crystal molecules (nematic liquid crystal having positive dielectric constant anisotropy) 122 are aligned into a horizontal bend alignment along the applied electric field. The vertical alignment is maintained in portions overlapping the electrodes and portions overlapping the centers between pairs of the electrodes. Thus, liquid crystal molecules in the non-electrode portions contribute to transmission.

The liquid crystal display element of the embodiment 1 of the present invention is a TBA mode liquid crystal display element in which the positive nematic liquid crystal (nematic liquid crystal having positive dielectric constant anisotropy) in the liquid crystal layer 121 is aligned vertically to the surface when no voltage is applied, and the alignment of the liquid crystal molecules in the liquid crystal layer 121 is changed to a horizontal bend alignment by applying a horizontal electric field (an electric field in the direction along the substrates) to the liquid crystal layer 121.

The transparent substrates 102 and 112 have polarizing plate 107 and 108, respectively, on the surfaces opposite to the liquid crystal layer 121. The liquid crystal display element of the present embodiment includes a resin bead spacer for ensuring the liquid crystal layer thickness (cell gap) and a sealingmaterial for sealing the liquid crystal layer 121 between the array substrate 101 and the opposed substrate 111.

### (Examples 1, 2 and Comparative Example 1)

As shown in Table 1, common organic matter has a dielectric constant of approximately 3 or less, and common inorganic matter has a dielectric constant of approximately 4 or more. The term "εy" refers to a specific dielectric constant.

**[Table 1]**

| | Dielectric constant (ε_{Y}) |
|---|---|
| Glass | 5.4 to 9.9 |
| Glass epoxy substrate | 4 to 4.8 |
| Quartz | 3.8 |
| Rubber | 2 to 3.5 |

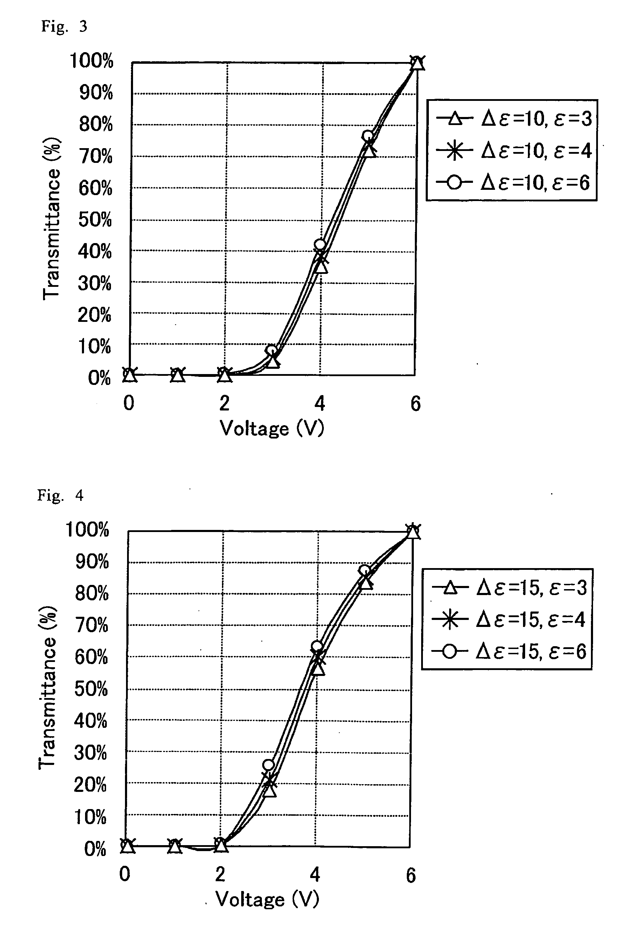

Figs. 3 to 6 show the voltage versus transmittance data (alignment film thickness 1000 Å) of the TBA mode in which the dielectric constant ε of the alignment films A and B was 3, which corresponds to that of organic matter, and 4 and 6 which correspond to that of inorganic matter (Comparative Example 1 and Examples 1 and 2, respectively) in the case that the dielectric constant anisotropy Δε of liquid crystal was 10, 15, 20, and 25.

Fig. 3 is a graph of the voltage-transmittance property of the TBA mode cells of Examples 1 and 2 and Comparative Example 1 in the case that the dielectric constant anisotropy Δε of the liquid crystal is 10.
Fig. 4 is a graph of the voltage-transmittance property of the TBA mode cells of Examples 1 and 2 and Comparative Example 1 in the case that the dielectric constant anisotropy Δε of the liquid crystal is 15.

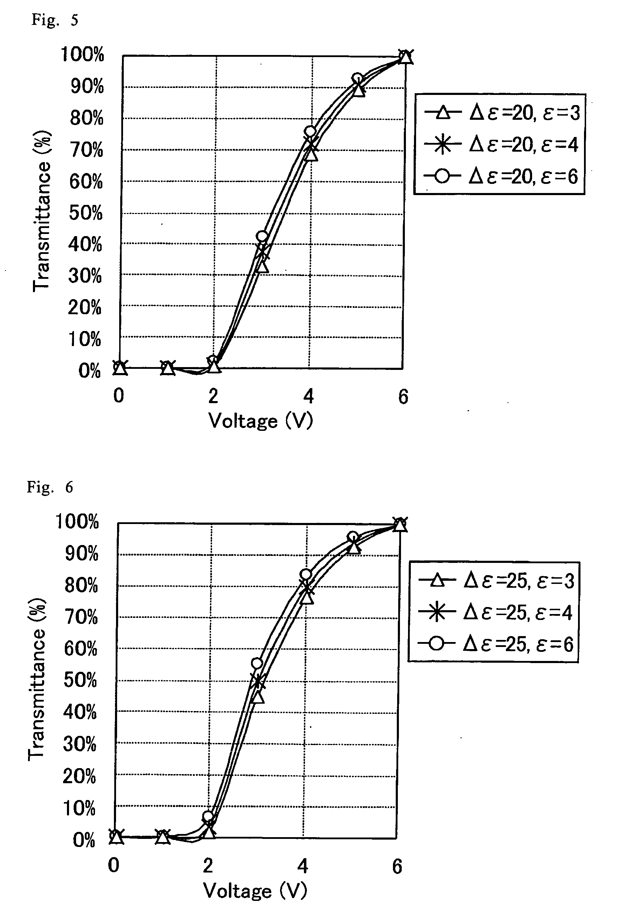

Fig. 5 is a graph of the voltage-transmittance property of the TBA mode cells of Examples 1 and 2 and Comparative Example 1 in the case that the dielectric constant anisotropy Δε of the liquid crystal is 20.
Fig. 6 is a graph of the voltage-transmittance property of the TBA mode cells of Examples 1 and 2 and Comparative Example 1 in the case that the dielectric constant anisotropy Δε of the liquid crystal is 25.
In Figs. 3 to 6, Δε is the dielectric constant anisotropy of the liquid crystal, and ε is the dielectric constant of vertical alignment films.
Figs. 3 to 6 demonstrate that an alignment film having a higher dielectric constant ε achieves a higher transmittance at low voltages.
The results can be summarized as follows.
(1) In the case that the Δε of liquid crystal is the same, an alignment film having a larger ε allows start-up by a lower voltage or provides a higher transmittance. Thus, the liquid crystal display element can be driven by a low voltage.
(2) In the case of an alignment film having a larger ε, it is possible to achieve a certain transmittance by a certain voltage even if the liquid crystal has a lower Δε. Therefore, liquid crystal having a lower Δε can be used, resulting in improved reliability and improved optical characteristics of the liquid crystal display element.

Tables 2 and 3 shows the results of physical property values in a common MVA mode (vertical alignment) (three cases in which the ε of the alignment film is 3, 4, and 6 under the condition: Δε of the liquid crystal = -3; and film thickness: 1000 Å) and the results of physical property values in a common TBA mode (three cases in which the ε of the alignment film is 3, 4, and 6 under the condition: Δε of the liquid crystal = 20; and film thickness: 1000 Å) likewise in Examples 1 and 2 and Comparative Example 1.

**[Table 2]**

| Transmittance ratio in the case of 2.1 V application (star-up voltage) | | | |
|---|---|---|---|
| | Dielectric constant (ε) of alignment film | | |
| | 3 | 4 | 6 |
| TBA (Δε = 20) | 100% | 121% | 154% |
| MVA (Δε = -3) | 100% | 114% | 130% |

**[Table 3]**

| Transmittance ratio in the case of 4 V application (grey level voltage) | | | |
|---|---|---|---|
| | Dielectric constant (ε) of alignment film | | |
| | 3 | 4 | 6 |
| TBA (Δε = 20) | 100% | 105% | 110% |
| MVA (Δε = -3) | 100% | 103% | 107% |

The results shown in Tables 2 and 3 demonstrate that as the ε of the alignment film increases, the transmittance increases, and that this effect is more obvious in the TBA mode in which the Δε of the liquid crystal is large. Thus, it is clear that the effect of the present invention is obvious in the TBA mode.

### (Examples 3-5 and Comparative Example 2)

An alignment film having a SiO bond (SiOx (x = 1 to 3)) and a vertical alignment group Y is provided as an inorganic alignment film 14 in each of Examples 3 to 5. For example, an inorganic alignment film including the structure of the following formula (1) is preferably used. The structure of the formula (1) includes the vertical alignment group Y at the terminal of a side chain of the main chain organosiloxane backbone. The structure of the formula (1) can be obtained by polycondensation of alkoxysilan monomers.

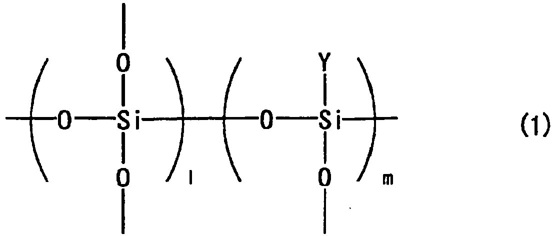

### (In the formula, 1 and m are the numbers of repetition of parenthesized structures and are positive integers.)

For example, Y is preferably a long chain alkyl group, a long chain fluoroalkyl group, a siloxane chain, or the like. In particular, Y is preferably one of those represented by the formulas (2) to (8).

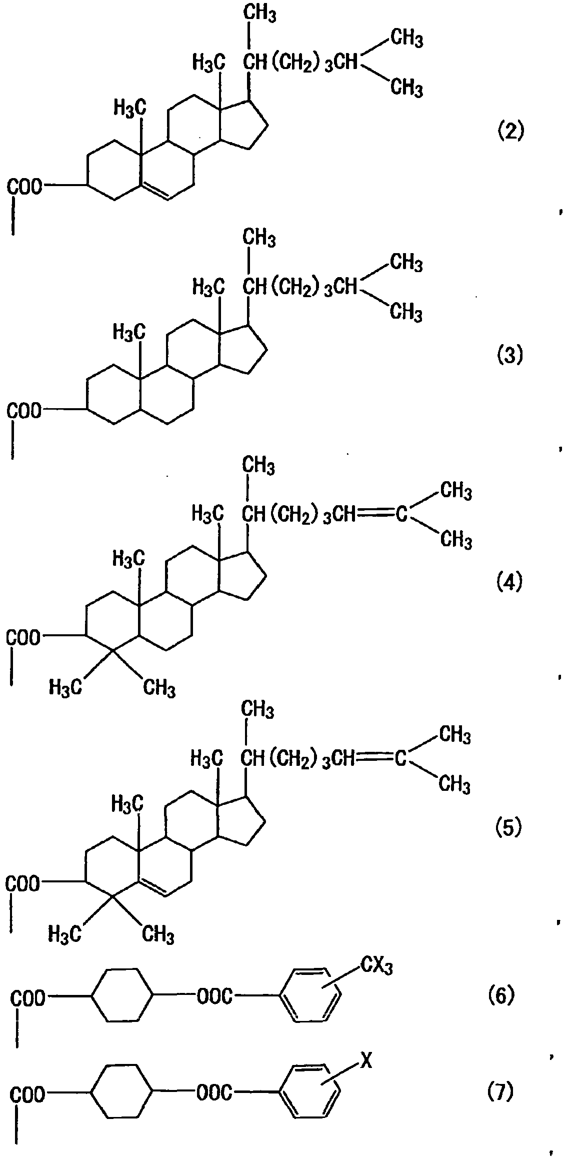

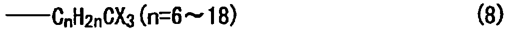

### (In the formulas, X is a halogen atom, and is preferably fluorine.)

Examples of usable liquid crystal alignment agents include liquid crystal alignment treatment agents disclosed in JP 9-230354 A, liquid crystal alignment treatment agents disclosed in WO 2003/042752, liquid crystal alignment treatment agents for vertical alignment disclosed in WO 2005/052028, liquid crystal alignment agents for vertical alignment disclosed in WO 2006/070819, and liquid crystal alignment agents for vertical alignment disclosed in JP 2006-30961 A.

The following gives a description of an actual procedure to produce a liquid crystal display element of Example 3 and the results of evaluation comparedto conventional liquidcrystal display elements. Specifically, the liquid crystal display element of Example 3 was produced as follows.

First, a glass substrate for an array substrate was prepared. This glass substrate was provided with a pair of comb-shaped electrodes, which were transparent electrodes of ITO (Indium Tin Oxide) or the like, on a surface. An inorganic solution for vertical alignment films containing a compound having the structure of the formula (1) was applied to the glass substrate and the comb-shaped electrodes by spin coating in such a manner to provide a film of 1000 Å after firing. Thereafter, the substrate coated with the solution was fired for about one hour at 200°C. In this manner, an inorganic alignment film was formed. The width of each tooth of the comb-shaped electrodes was 4.0 µm and the distance between the teeth was 8.0 µm (line/space = 4.0 µm/8.0 µm).

Next, an inorganic alignment film was formed on a glass substrate for an opposed substrate by the same procedure. Subsequently, a resin bead spacer having a diameter to provide a desired cell thickness (d) was disposed on the array substrate, for example, by dispersion, and an epoxy sealing resin was printed on the opposed substrate. These substrates were then attached to each other, and the sealing resin was cured at 180°C for two hours. In this manner, a liquid crystal cell was produced.

Then, positive nematic liquid crystal (nematic liquid crystal having positive dielectric constant anisotropy) was sealed in the liquid crystal cell by vacuum injection, and a polarizing plate was attached to the surface of each glass substrate opposite to the liquid crystal layer. In this manner, the liquid crystal display element (Example 3) was produced. The Δn of the positive nematic liquid crystal (nematic liquid crystal havingpositive dielectric constant anisotropy) was such that a dΔn was approximately λ/2 by application of a voltage. The Δε of the liquid crystal was 22.

Finally, voltage-transmittance property data of the liquid crystal display element of Example 3 was obtained by using a liquid crystal evaluation device LCD-5200 produced by Otsuka Electronics Co., Ltd.

Liquid crystal display elements were produced in the same manner as in Example 3, except that instead of the above-described inorganic solution for vertical alignment films, an organic alignment film SE-1211 free from SiO bonds (produced by Nissan Chemical Industries, Ltd.) was used as a material for vertical alignment films to form the vertical alignment film A (Example 4), to form the vertical alignment film B (Example 5), or to form the vertical alignment films A and B (Comparative Example 1). Voltage-transmittance property data was also obtained in the same manner. The results obtained by the voltage application of (1) 0 V → 6.5 V are shown in Table 4, and the results obtained by the voltage application of (2) 6.5 V → 0 V are shown in Table 5. Table 6 shows the total of the results of (1) and (2).

**[Table 4]**

| | | | |
|---|---|---|---|
| (1) 0 V → 6.5 V | | | |

| | | Vertical alignment film A | |
|---|---|---|---|
| | | Inorganic | Organic |
| Vertical | Inorganic | 11.7 msec | 11.8 msec |
| alignment film | Organic | 14.8 msec | 15.1 msec |

**[Table 5]**

| | | | |
|---|---|---|---|
| (2) 6.5 V → 0 V | | | |

| | | Vertical alignment film A | |
|---|---|---|---|
| | | Inorganic | Organic |
| Vertical | Inorganic | 6.8 msec | 6.6 msec |
| alignment film B | Organic | 6.7 msec | 6.4 msec |

**[Table 6]**

| | | | |
|---|---|---|---|
| (1)+(2) | | | |

| | | Vertical alignment film A | |
|---|---|---|---|
| | | Inorganic | Organic |
| Vertical | Inorganic | 18.5 msec | 18.4 msec |
| alignment film B | Organic | 21.5 msec | 21.5 msec |

(1) In the case that an inorganic alignment film is formed on the comb-shaped electrode side (as the vertical alignment film B), the response speed to the voltage application of 0 V to 6.5 V is shortened due to weak anchoring of the inorganic film than that of an organic film (Table 4).
(2) Although the response speed to the voltage application of 6.5 V to 0 V is generally slow in the case of weak anchoring, such delay of the response speed caused by weak anchoring hardly occurs because the bend alignment is changed to the original vertical alignment due to inner stress in this mode (Table 5).
   The total response of (1) and (2) also demonstrates that the response speed is faster in the case that the inorganic alignment film is used on the comb-shaped electrode side (as the vertical alignment film B).

These results demonstrate that the anchoring energy can be reduced by forming an inorganic alignment film on a substrate having a pair of comb-shaped electrodes, especially by forming an inorganic alignment film only on a substrate having a pair of comb-shaped electrodes, which leads to a threshold voltage reducing effect.

Although the inorganic alignment film is an inorganic alignment film having a SiO bond and a vertical alignment group Y in the above description, it is not limited only to such a film. Other examples thereof include inorganic alignment films of AlOx, SiOx, TiOx, or SiC. Also, the inorganic alignment film in the present embodiment may be a laminate film of such an inorganic dielectric material as described above. These materials may be appropriately used together. The inorganic alignment film may further contain Al (aluminum), Ga (gallium), In (indium), Si (silicon), Ge (germanium), Sn (tin), Ti (titanium), Zr (zirconium), and/or Hf (hafnium). In this case, the anchoring energy can be further reduced.

In the case that the liquid crystal display element of the present embodiment further includes a driving circuit, a backlight (lighting equipment), and the like, it can be used in mobile phones, PDAs, car navigation systems, PC monitors, televisions, and information displays such as guide boards in stations and outdoor notice boards.

### (Embodiment 2)

A liquid crystal display element of the present embodiment differs from that of the embodiment 1 in the following respects.
The liquid crystal display element of the present embodiment includes an opposed electrode on the opposed substrate side. Specifically, as shown in Fig. 9, an opposed electrode 61, a dielectric layer (insulating layer) 62, and a vertical alignment film A are arranged in this order on the main surface, facing a liquid crystal layer 121, of a glass substrate 112. Acolor filter 113, ablackmatrix (BM), or the like maybe provided between the opposed electrode 61 and the glass substrate 112.

The opposed electrode 61 is formed by a transparent conductive filmmade of ITO, IZO, or the like. Both of the opposed electrode 61 and the dielectric layer 62 are formed to cover at least the entire display region without an exposed portion. A predetermined potential is uniformly applied to the entire opposed electrode 61 covering all the pixels.

The dielectric layer 62 is made of a transparent insulating material. Specifically, the dielectric layer 62 is formed by an inorganic insulating film of silicon nitride, an organic insulating film of an acrylic resin, or the like.

Comb-shaped electrodes including pixel electrodes 20 and a common electrode 30, and a vertical alignment filmB are provided on a glass substrate 102 like that of the embodiment 1. Polarizing plates 107 and 108, respectively, are provided on the outer main surfaces of the two substrates 102 and 112.

Different voltages are applied between the pixel electrodes 20, and the common electrode 30 and between the pixel electrodes 20 and the opposed electrode 61, respectively, for display except black display. The common electrode 30 and the opposed electrode 61 may be grounded. A voltage of a certain magnitude and a certain polarity may be applied to both the common electrode 30 and the opposed electrode 61, or alternatively voltages of different magnitudes and different polarities may be applied.

The liquid crystal display element of the embodiment 2 also sufficiently improves the reliability and the optical characteristics and can be driven by a low voltage like that of the embodiment 1. In addition, the response speed is also improved since the opposed electrode 61 is formed.

Since the inorganic alignment films is remarkably fine, the use of an inorganic alignment film as the vertical alignment film A prevents components in the color filter 113 and the dielectric layer 62 from invading the liquid crystal layer 121. Namely, the vertical alignment film A serves as a barrier layer.

Also, the low-voltage driving and response speed increasing effect were confirmed in the embodiment 2 like in the embodiment 1.

Any of the structures of the above embodiments may be combined within the scope of the present invention.

The present application claims priority to Patent Application No. 2010-006692 filed in Japan on January 15, 2010 under the Paris Convention and provisions of national law in a designated State, the entire contents of which are hereby incorporated by reference.

### EXPLANATION OF SYMBOLS

20: Pixel electrode
30: Common electrode
61: Opposed electrode
62: Dielectric layer
101: Array substrate
102, 112: Glass substrate
103: Comb-shaped electrode
107, 108: Polarizing plate
111: Opposed substrate
113: Color filter
121: Liquid crystal layer
122: Liquid crystal molecule aligned in bend alignment along applied electric field
123: Direction of applied electric field
A, B: Vertical alignment film

## Claims

1. A liquid crystal display element comprising:
a pair of substrates; and
a liquid crystal layer sealed between the substrates,
wherein the liquid crystal layer comprises liquid crystal molecules having positive dielectric constant anisotropy,
at least one of the substrates comprises a pair of comb-shaped electrodes,
at least one of the substrates comprises a vertical alignment film in a display region on a face in contact with the liquid crystal layer, and
the vertical alignment film is an inorganic alignment film made of an inorganic material.

2. The liquid crystal display element according to claim 1,
wherein the inorganic material has a dielectric constant of 4 to 6.

3. The liquid crystal display element according to claim 1 or 2,
wherein the inorganic alignment film is provided only on the at least one of the substrates that comprises the comb-shaped electrodes.

4. The liquid crystal display element according to any one of claims 1 to 3,
wherein the inorganic alignment film is formed by printing, spin coating, or ink jetting.
